Europäisches Patentamt

European Patent Office

Office européen des brevets

(11) Numéro de publication: **0 536 054 B1**

# FASCICULE DE BREVET EUROPEEN

(45) Date de publication du fascicule du brevet: **30.08.95** (51) Int. Cl.⁶: **C10G 11/18**

(21) Numéro de dépôt: **92402697.4**

(22) Date de dépôt: **02.10.92**

(54) **Perfectionnements aux dispositifs de craquage catalytique à l'état fluide de charges d'hydrocarbures.**

(30) Priorité: **04.10.91 FR 9112252**

(43) Date de publication de la demande:
**07.04.93 Bulletin 93/14**

(45) Mention de la délivrance du brevet:
**30.08.95 Bulletin 95/35**

(84) Etats contractants désignés:
**AT BE CH DE DK ES FR GB GR IE IT LI LU MC NL PT SE**

(56) Documents cités:
**EP-A- 0 282 371**
**US-A- 4 574 044**
**US-A- 4 721 603**

(73) Titulaire: **TOTAL RAFFINAGE DISTRIBUTION S.A.**
**Tour Total,**
**24 cours Michelet**
**F-92800 Puteaux (FR)**

(72) Inventeur: **Fersing, Marc**
**24, rue Chef de Caux**
**F-76310 Saint-Adresse (FR)**
Inventeur: **Pontvianne, Denis**
**2, rue Jules Guesde**
**F-92120 Montrouge (FR)**

(74) Mandataire: **Jolly, Jean-Pierre et al**
**Cabinet Jolly**
**54, rue de Clichy**
**F-75009 Paris (FR)**

## Description

La présente invention concerne des perfectionnements apportés aux dispositifs de craquage catalytique à l'état fluide de charges d'hydrocarbures. Elle concerne plus particulièrement des perfectionnements apportés à la chambre de séparation balistique et de strippage des particules de catalyseur coké, généralement disposée au sommet des réacteurs à flux ascendant dits élévateurs (ou, en anglais, "risers"), utilisés dans de tels dispositifs.

On sait que l'industrie pétrolière utilise de façon usuelle des procédés de craquage, dans lesquels des molécules d'hydrocarbures à hauts poids moléculaire et à point d'ébullition élevé sont scindées en molécules plus petites, qui peuvent bouillir dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est simultanément vaporisée et mise en contact à haute température avec un catalyseur de craquage, qui est maintenu en suspension dans les vapeurs de la charge. Après que l'on ait atteint par craquage la gamme de poids moléculaires désirée, avec un abaissement correspondant des points d'ébullition, le catalyseur est séparé des produits obtenus.

Dans les procédés de ce type, la réduction souhaitée des points d'ébullition résulte de réactions catalytiques et thermiques contrôlées. Ces réactions interviennent de façon quasi-instantanée, lorsque la charge finement atomisée est mise en contact avec le catalyseur. Celui-ci se désactive cependant rapidement, pendant le court laps de temps où il est en contact avec la charge, du fait, essentiellement, d'une adsorption d'hydrocarbures et d'un dépôt de coke sur ses sites actifs. Il est nécessaire de séparer aussi rapidement que possible les hydrocarbures effluents des grains de catalyseur coké, de stripper en continu ces derniers, par exemple à la vapeur, pour récupérer les hydrocarbures adsorbés, et de réactiver les grains de catalyseur, également en continu, sans altérer leurs caractéristiques, en procédant à une combustion contrôlée du coke, dans une section de régénération à un ou plusieurs étages, avant de recycler le catalyseur vers la zone réactionnelle.

Dans la pratique, le catalyseur du procédé FCC et la charge à traiter sont injectés sous pression et à une température élevée à la base d'une colonne dite "élévateur de charge", que les techniciens désignent souvent par le terme anglais de "riser". Au sommet de la colonne est généralement disposée une chambre concentrique à l'élévateur. Dans cette chambre et au-dessus de l'élévateur est disposé un séparateur balistique, qui sépare les grains de catalyseur coké des vapeurs d'hydrocarbures. Celles-ci, après récupération des fines de catalyseur dans un cyclone, sont évacuées vers un dispositif de fractionnement. Les grains de catalyseur coké tombent par gravité vers la base de la chambre de séparation, sont strippés à la vapeur pour récupérer les hydrocarbures encore présents dans les pores et sont ensuite évacués vers un régénérateur, dans lequel l'activité catalytique est restaurée par combustion du coke déposé au cours de la réaction de craquage.

Le procédé FCC est donc mis en oeuvre de façon telle que l'unité de craquage soit en équilibre thermique, toute la chaleur nécessaire étant apportée par la combustion du coke déposé au cours de la réaction de craquage sur les grains de catalyseur.

Les réactions de craquage de la charge au contact du catalyseur sont très rapides et durent moins d'une seconde, généralement de l'ordre d'une demi-seconde.

Il importe donc d'optimiser avec soin la durée du séjour de la charge dans la zone réactionnelle, au contact des particules de catalyseur, car, si cette durée est trop longue, il se forme trop de coke, d'hydrogène et de gaz secs (éthane, propane) au détriment de l'essence et, si la durée de craquage est trop courte, le rendement en essence est insuffisant.

Les travaux effectués par la Demanderesse l'ont amenée à établir qu'il convient de séparer le plus rapidement possible, dans la chambre de séparation, les vapeurs d'hydrocarbures et les particules de catalyseur usé, afin d'éviter que les hydrocarbures soient entraînés par ces particules et continuent à craquer thermiquement à leur contact.

Par ailleurs, à l'intérieur de la chambre de séparation, il convient d'homogénéiser, en les minimisant, les durées de séjour des hydrocarbures, qui, dans la pratique, peuvent varier du simple au double, du fait de courants de recirculation, tant au-dessus du séparateur balistique qu'au-dessous de celui-ci. En effet, des courants de vapeurs d'hydrocarbures s'établissent, d'une part, au-dessus du séparateur balistique, entre celui-ci et la partie supérieure de l'enceinte de séparation, d'autre part, au-dessous de ce séparateur, entre celui-ci et le lit fluidisé de particules de catalyseur coké en cours de strippage. Non seulement les temps de séjour des vapeurs de ces divers courants peuvent être notablement différents, mais on court le risque d'un réentraînement, à l'intérieur du lit fluidisé de particules de catalyseur, d'une partie des vapeurs

2

EP 0 536 054 B1

d'hydrocarbures situées au-dessous du séparateur.

Ce sont ces problèmes de la technique antérieure que la présente invention se propose de résoudre d'une façon simple et facile à mettre en oeuvre.

Un premier but de l'invention est donc de proposer, dans un dispositif de craquage catalytique à l'état fluide de charges d'hydrocarbures, des perfectionnements aux chambres de séparation balistique et de strippage des particules du catalyseur coké, en vue de limiter dans de telles chambres le temps de contact de ces particules et des vapeurs d'hydrocarbures.

Un second but de l'invention est d'homogénéiser la durée de séjour des vapeurs d'hydrocarbures à l'intérieur de ces chambres de séparation balistique et de strippage des particules de catalyseur coké.

Un autre but de l'invention est d'améliorer l'efficacité du strippage dans de telles chambres et de limiter la quantité de coke susceptible de se former sur les particules de catalyseur coké.

A cet effet, l'invention a pour objet un dispositif de craquage catalytique à l'état fluide de charges d'hydrocarbures, ce dispositif comprenant : une colonne du type élévateur; des moyens disposés à la base dudit élévateur pour alimenter celui-ci sous pression avec une charge d'hydrocarbures et des particules d'un catalyseur de craquage ; au sommet de l'élévateur et concentriquement à celui-ci, une enceinte de séparation des vapeurs d'hydrocarbures et des particules de catalyseur coké, cette enceinte étant alimentée à sa base par un gaz de strippage, à contre-courant des particules de catalyseur coké ; à l'aplomb de l'orifice supérieur de l'élévateur et à l'intérieur de ladite enceinte, un séparateur balistique ; au moins une unité de régénération du catalyseur usé alimentée en particules strippées à partir de ladite enceinte ; et des moyens de recyclage du catalyseur régénéré depuis l'unité de régénération jusqu'aux moyens d'alimentation ; l'enceinte de séparation des particules de catalyseur coké et de strippage de celles-ci comportant, à un niveau intermédiaire entre le lit de particules en cours de strippage et l'orifice de l'élévateur, à partir de la paroi interne de cette enceinte, un moyen apte à former une chicane, pour limiter localement le passage libre à la périphérie de l'élévateur, ce dispositif étant caractérisé en ce que le moyen apte à former une chicane est constitué par une couronne , attenante à la paroi interne de l'enceinte de séparation balistique et de strippage et disposée coaxialement à l'élévateur , ou par des ailettes, attenantes à la paroi interne de l'enceinte de séparation balistique et de strippage et disposées coaxialement à l'élévateur à la manière d'une couronne, ladite couronne faisant saillie à partir de la paroi interne de l'enceinte au-dessus du lit de particules catalytiques en cours de strippage et étant inclinée vers ce lit en formant avec un plan perpendiculaire à l'axe de l'enceinte un angle compris entre 5 et 20°.

La Demanderesse a établi, en effet, que la présence d'une telle chicane à une distance suffisante au-dessous de l'orifice supérieur de l'élévateur a pour effet de réduire considérablement les courants de recirculation des vapeurs d'hydrocarbures au-dessous du séparateur balistique, de limiter le temps de séjour de ces hydrocarbures dans l'enceinte, et par conséquent de réduire le temps de contact avec le catalyseur. La concentration en hydrocarbures au-dessous de la chicane ne représente plus qu'environ 10% de la concentration habituelle en l'absence de chicane. On limite ainsi de façon très appréciable le craquage thermique, les risques de réentraînement des vapeurs d'hydrocarbures par le lit fluidisé de particules catalytiques en cours de strippage.

Avantageusement, le moyen apte à former une chicane sera disposé à un niveau situé à une distance du lit fluidisé comprise, dans le sens de la hauteur, entre 0,50 et 0,95 fois et, de préférence, entre 0,7 et 0,9 fois la distance séparant l'orifice de l'élévateur du lit fluidisé de particules catalytiques en cours de strippage.

De préférence, également, le moyen apte à former une chicane obturera entre 5 et 35 % de la section de passage entre l'élévateur et la paroi interne de l'enceinte de séparation balistique et de strippage.

US-A- 4574044 et US-A-4721603 ont déjà décrit des dispositifs de craquage à l'état fluide de charges d'hydrocarbures, dans lesquels l'enceinte de séparation des particules de catalyseur usé et de strippage de celle-ci comprend des éléments de chicanes faisant saillie à partir de la paroi interne de l'enceinte ou constitués par une partie de cette paroi, mais ces éléments sont très fortement inclinées vers le lit de particules en cours de strippage, et ils sont en général utilisés en combinaison avec des éléments de chicanes faisant saillie latéralement à partir de la colonne de craquage, qui sont eux-mêmes fortement inclinés en direction du lit de particules.

Conformément à l'invention, au contraire, les couronnes formant chicane sont inclinées vers le bas de l'enceinte en faisant avec un plan perpendiculaire à l'axe de l'enceinte un angle compris entre 5 et 20°, en vue de favoriser un écoulement naturel des particules de catalyseur usé vers le lit fluidisé.

Ces couronnes peuvent comporter également des orifices et/ou des parties en saillie pour chasser les grains de catalyseur qui peuvent s'y déposer. Dans le même but, des injecteurs d'un gaz tel que de la vapeur, dirigés de préférence vers l'axe de l'élévateur, peuvent également être prévus au-dessus ou au-dessous de la couronne formant chicane.

3

EP 0 536 054 B1

Le moyen formant chicane pourra également comprendre lui-même des moyens d'injection d'une nappe de gaz sous pression, par exemple de vapeur d'eau, en direction de l'axe de l'élévateur.

La Demanderesse a établi qu'en utilisant des moyens formant chicane à l'intérieur de l'enceinte de séparation et de strippage des grains de catalyseur usé, non seulement on réduit les risques de réentraînement dans le lit fluidisé des particules en cours de strippage, comme indiqué ci-dessus, mais on améliore aussi considérablement la qualité du strippage en phase diluée, ce qui permet une réduction de la teneur en coke du catalyseur d'au plus 15% relatif. Le flux d'hydrocarbures désorbés des particules de catalyseur coké avec le dispositif conforme à l'invention est environ le double de celui désorbé habituellement dans les mêmes installations non équipées du moyen apte à former une chicane.

Par ailleurs, on constate une réduction d'environ 50% du temps de séjour des hydrocarbures dans l'enceinte de séparation et de strippage, ce qui se traduit par une réduction de 5 à 10% relatif du rendement en hydrogène produit, une réduction du rendement en gaz secs d'environ 15 à 20% relatif, au profit du rendement en essence (0,5 à 1% en poids absolu en plus). Ces résultats particulièrement avantageux sont cohérents avec les études publiées dans la technique, selon lesquelles les réactions de craquage thermique à l'intérieur de l'enceinte de séparation et de strippage des particules de catalyseur coké contribuent à la formation de plus de 50% des gaz secs produits.

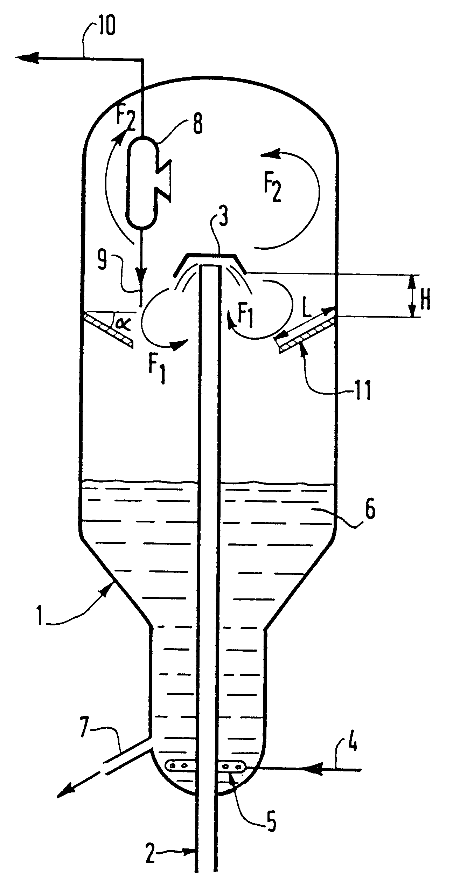

Le dessin schématique annexé représente une enceinte de séparation balistique et de strippage, équipée d'une chicane conforme à l'invention.

Cette enceinte 1, de forme générale cylindrique, est disposée coaxialement à la partie supérieure d'un élévateur ou riser 2, qui débouche dans l'enceinte 1 en regard d'un bouclier 3, formant séparateur balistique. Ce bouclier 3 renvoie la plus grande partie des grains de catalyseur usé vers la base de l'enceinte 1, où de la vapeur d'eau, amenée par une ligne 4 à un diffuseur 5, les maintient en un lit fluidisé dilué 6 pour assurer leur strippage. Les grains de catalyseur strippé sont évacués par une ligne 7 vers une unité de régénération (non représentée).

A la partie supérieure de l'enceinte 1, un cyclone 8 aspire les fines de catalyseur mélangées aux vapeurs d'hydrocarbures et rejette ces fines par la ligne 9 vers le lit fluidisé 6, tandis qu'une ligne 10 évacue les vapeurs d'hydrocarbures vers une unité de séparation (non représentée).

Conformément à l'invention, une chicane, constituée dans le cas présent par une couronne 11, attenante à la paroi interne de l'enceinte 1 et inclinée vers le lit 6, est disposée concentriquement à l'élévateur 2, à un niveau intermédiaire entre celui de l'orifice supérieur de l'élévateur 2 et la surface supérieure du lit 6.

Dans le cas présent, cette couronne 11 formant chicane est disposée de façon telle que le volume de l'enceinte 1 compris entre la chicane et le lit fluidisé 6 soit sensiblement égal à celui situé au-dessus de la chicane.

Comme représenté schématiquement sur le dessin, la majeure partie des vapeurs d'hydrocarbures situées au-dessous du bouclier 3 sont déviées suivant les flèches $F_1$ par la chicane 11, qui fait office de déflecteur, et les courants ainsi créés ne risquent pas de venir au contact du lit 6 et d'être entraînés par celui-ci. Les vapeurs d'hydrocarbures situées au-dessus du bouclier 3 suivent leur trajet habituel suivant les flèches $F_2$ en direction du cyclone 8.

Dans une forme de réalisation de l'invention testée par la Demanderesse, l'enceinte 1 a un diamètre de 6,6 m, tandis que le diamètre de l'élévateur 2 est égal à 1,30 m, et les conditions opératoires sont telles que la vitesse des hydrocarbures dans l'élévateur 2 est de 20 m/s, tandis que la vitesse des vapeurs sortant du lit de catalyseur coké dans l'enceinte 1 en dessous de la chicane 11 est égale à 0,1 m/s. La couronne 11 formant chicane est située à une distance H, dans le sens de la hauteur, du niveau de l'orifice de l'élévateur 2 égale à 1 500 mm, tandis que sa largeur L est de 400 mm et son angle d'inclinaison $\alpha$ sur l'horizontale de 7°. Cette inclinaison a pour but essentiel de faciliter le glissement des particules de catalyseur et d'éviter qu'elles ne s'y accumulent. Cet angle doit être aussi faible que possible, en vue d'accroître l'efficacité de la chicane 11.

Des essais comparatifs effectués avec cette enceinte, avant et après mise en place des chicanes, vont maintenant être décrits à titre non limitatif dans les Exemples suivants.

EXEMPLE 1

Le présent exemple vise à illustrer l'efficacité de la chicane 11 du dispositif du dessin annexé pour l'obtention d'un meilleur strippage des fluides en sortie du riser.

Dans ce but, deux essais de craquage catalytique ont été réalisés à partir d'une même charge d'hydrocarbures dans une unité de craquage catalytique du type général représenté sur la figure unique annexée.

4

L'un des essais (essai 1) a été réalisé avant installation de la chicane 11. Le second (essai 2) a été réalisé après installation d'une chicane telle que représentée, l'installation de la chicane ayant été réalisée au cours d'un arrêt de l'unité.

Les caractéristiques du dispositif utilisé dans le second essai étaient les suivantes :

| | |
|---|---|
| - Diamètre intérieur du stripper | 6 500 mm |
| - Largeur de la chicane | 400 mm (distance entre l'extrémité de la chicane et la paroi du stripper) |
| - Inclinaison de la chicane | 7° (vers le bas) |
| - Distance H | 1,50 m. |

La charge traitée était un distillat sous vide, présentant les caractéristiques suivantes :

| | |
|---|---|
| - Densité (à 15° C) | 0,935 |
| - Soufre (% en poids) | 1,6 |
| - Azote basique (ppm en poids) | 470,0 |
| - Vanadium (ppm en poids) | 0,6 |
| - Nickel (ppm en poids) | 0,1 |
| - Carbone Conradson (% en poids) | 1,0. |

Au cours des deux essais, les conditions opératoires ont été celles indiquées dans le Tableau 1 ci-après :

## TABLEAU 1

| | Essai 1 | Essai 2 |
|---|---|---|
| Température de régénération (°C) | 735 | 722 |
| Température de préchauffe (°C) | 293 | 289 |
| Température des effluents (°C) | 530 | 530 |
| Type de catalyseur | Zéolite USY | Zéolite USY |
| Type de catalyseur | Zéolite USY | Zéolite USY |
| Temps de séjour des hydro-carbures en phase diluée (s) | 25 | 12 |
| Rapport catalyseur sur charge c/c | 5,8 | 6,2 |

EP 0 536 054 B1

Les résultats des essais 1 et 2 sont rassemblés dans le Tableau 2 ci-après :

## TABLEAU 2

|  | Essai 1 | Essai 2 |
|---|---|---|
| Gaz Secs (% en poids/charge) | 5,55 | 4,85 |
| Gaz de pétrole liquéfié | 14,54 | 14,91 |
| Essence | 43,26 | 44,46 |
| Diluant léger | 20,02 | 19,52 |
| Slurry | 11,64 | 11,27 |
| Coke | 5,00 | 5,00 |
| Conversion | 68,34 | 69,21 |

Le Tableau 1 montre une baisse sensible (13°C) de la température de régénération, ce qui se traduit par une augmentation de la circulation de catalyseur.

Le Tableau 2 montre que la conversion est améliorée (+ 0,9 % en poids) grâce à l'augmentation de la circulation de catalyseur.

La sélectivité est améliorée grâce à la chicane.

Globalement, on obtient plus d'essence pour moins de gaz secs, de slurry catalytique et de diluant léger. Les gaz de pétrole liquéfié augmentent également un peu.

Cet exemple illustre clairement la diminution des risques de réentraînement des hydrocarbures dans le lit fluidisé, l'amélioration du strippage des particules de catalyseur en phase fluidisée, la réduction de temps de séjour du catalyseur dans l'enceinte du strippage et l'amélioration concomitante du rendement en essence de l'installation de craquage catalytique.

## EXEMPLE 2

Ce deuxième exemple vise à illustrer l'influence du positionnement de la chicane dans l'enceinte pour l'obtention d'un meilleur strippage des fluides en sortie de riser se traduisant par un meilleur rendement en produits valorisables.

Cinq essais de craquage catalytique ont été réalisés dans le même dispositif et dans les mêmes conditions que dans l'exemple 1, mais avec un distillat sous vide différent. Seul varie ici le positionnement de la chicane le long de la paroi interne de l'enceinte, ou sur le riser lui-même.

Le distillat sous vide présente les caractéristiques suivante :

| | |
|---|---|
| - Densité (à 15° C) | 0,917, |
| - Viscosité (à 100° C) (en Cst) | 9,22, |
| - Soufre (% en poids) | 0,68, |
| - Azote basique (ppm en poids) | 561,0, |
| - Vanadium (ppm en poids) | < 2, |
| - Nickel (ppm en poids) | < 2. |

L'essai 1 correspond, comme dans l'exemple 1, à une enceinte non équipée de chicane.

L'essai 2 concerne une enceinte équipée d'une chicane pour laquelle la distance H est de 1,50 m.

Dans l'essai 3, la chicane est positionnée au niveau du lit du catalyseur à une distance H de 4 m.

Dans les essais 4 et 5, les chicanes ne sont plus positionnées à la périphérie de l'enceinte, mais sur l'élévateur lui-même, sous l'orifice de celui-ci, à une distance H respectivement de 1,5 m et de 0,5 m.

6

Les rendements en produits des essais sont rassemblés dans le Tableau 3 ci-aprés et sont exprimés en % poids, par rapport à la charge.

## TABLEAU 3

|  | Essai 1 | Essai 2 | Essai 3 | Essai 4 | Essai 5 |
|---|---|---|---|---|---|
| H en m | --- | 1,50 | 4,00 | 1,50 | 0,50 |
| Gaz secs | 3,1 | 2,7 | 3,0 | 3,1 | 3,0 |
| LPG | 11,3 | 13,5 | 12,2 | 11,9 | 11,8 |
| Essence | 47,2 | 48,0 | 47,4 | 47,3 | 47,1 |
| LCO | 18,1 | 17,5 | 18,0 | 18,1 | 18,2 |
| Slurry | 14,6 | 13,5 | 14,3 | 14,6 | 14,5 |
| Coke | 4,5 | 4,5 | 4,5 | 4,5 | 4,5 |
| Conversion | 67,2 | 69,2 | 67,6 | 67,3 | 66,9 |

On constate que, pour obtenir les meilleurs rendements en essence et en LCO, ainsi que la meilleure conversion, avec une production réduite de gaz secs, de coke et de slurry, la chicane doit être placée dans la position utilisée dans l'essai 2. Dans ce cas, le gain est de 2 % de conversion.

Si la chicane est trop basse, comme dans l'essai 3, son effet est quasi nul, de même que lorsqu'elle est située sur l'élévateur lui-même, soit à proximité de l'orifice (Essai 5), soit à la même distance H de l'orifice que dans l'Exemple 2 (Essai 4).

Le présent exemple confirme donc que l'efficacité d'une chicane du type de celle de l'invention est liée à son positionnement judicieux à la périphérie de l'enceinte.

**Revendications**

1. Dispositif de craquage catalytique à l'état fluide de charges d'hydrocarbures, ce dispositif comprenant : une colonne du type élévateur (2) ; des moyens disposés à la base dudit élévateur pour alimenter celui-ci sous pression avec une charge d'hydrocarbures et des particules d'un catalyseur de craquage ; au sommet de l'élévateur (2) et concentriquement à celui-ci, une enceinte (1) de séparation des vapeurs d'hydrocarbures et des particules de catalyseur coké, cette enceinte étant alimentée à sa base (en 5) par un gaz de strippage, à contre-courant des particules de catalyseur coké ; à l'aplomb de l'orifice supérieur de l'élévateur (2) et à l'intérieur de ladite enceinte (1), un séparateur balistique (3); au moins une unité de régénération du catalyseur usé alimentée en particules strippées à partir de ladite enceinte ; et des moyens de recyclage du catalyseur régénéré depuis l'unité de régénération jusqu'aux moyens d'alimentation ; l'enceinte (1) de séparation des particules de catalyseur coké et de strippage de celles-ci comportant , à un niveau intermédiaire entre le lit (6) de particules en cours de strippage et l'orifice de l'élévateur (2), à partir de la paroi interne de cette enceinte, un moyen (11) apte à former une chicane, pour limiter localement le passage libre à la périphérie de l'élévateur (2), ce dispositif étant caractérisé en ce que le moyen apte à former une chicane est constitué par une couronne (11), attenante à la paroi interne de l'enceinte (1) de séparation balistique et de strippage et disposée coaxialement à l'élévateur (2), ou par des ailettes, attenantes à la paroi interne de l'enceinte (1) de séparation balistique et de strippage et disposées coaxialement à l'élévateur (2) à la manière d'une couronne, ladite couronne faisant saillie à partir de la paroi interne de l'enceinte (1) au-dessus du lit (6) de particules catalytiques en cours de strippage et étant inclinée vers le lit (6) en formant avec un plan perpendiculaire à l'axe de l'enceinte (1) un angle ($\alpha$) compris entre 5 et 20°.

**2.** Dispositif selon la revendication 1, caractérisé en ce que le moyen apte à former une chicane (11) est disposé à une distance du lit fluidisé, comprise, dans le sens de la hauteur, entre 0,50 et 0,95 fois et, de préférence, entre 0,7 et 0,9 fois, la distance séparant l'orifice de l'élévateur (2) du lit fluidisé (6) de particules catalytiques en cours de strippage.

**3.** Dispositif selon l'une des revendications 1 et 2, caractérisé en ce que le moyen apte à former une chicane (11) obture entre 5 et 35 % de la section de passage entre l'élévateur (2) et la paroi interne de l'enceinte (1) de séparation balistique et de strippage.

**4.** Dispositif selon l'une des revendications 1 à 3, caractérisé en ce qu'il comporte, au-dessous ou au-dessus de ladite couronne, des injecteurs de gaz, dirigés de préférence vers l'axe de l'enceinte (1).

**5.** Dispositif selon l'une des revendications 1 à 3, caractérisé en ce que le moyen apte à former une chicane comprend en outre des moyens d'injection d'un gaz sous pression en direction de l'axe de ladite enceinte.

**Claims**

**1.** A fluid catalytic cracking device for hydrocarbon charges, this device comprising: an elevator-type column (2); means arranged at the base of said elevator to feed the latter, under pressure, with a hydrocarbon charge and particles of a cracking catalyst; at the top of the elevator (2) and concentrically therewith, a chamber (1) for separating the hydrocarbon vapours and the coked catalyst particles, this chamber being fed at its base (at 5) by a stripping gas, in counter-current to the coked catalyst particles; a ballistic separator (3) perpendicular with respect to the upper opening of the elevator (2) and inside said chamber (1); at least one unit for regenerating the used catalyst, fed with stripped particles from said chamber; and means of recycling the regenerated catalyst from the regeneration unit to the supply means; the chamber (1) for the separation of the particles of coked catalyst and for the stripping thereof comprising, at an intermediate level between the bed (6) of particles in the course of stripping and the opening of the elevator (2), from the internal wall of this chamber, a means (11) capable of forming a chicane, to limit locally free passage at the periphery of the elevator (2), this device being characterized in that the means capable of forming a chicane consists of a collar (11) adjoining the internal wall of the ballistic separation and stripping chamber (1) and arranged coaxially with the elevator (2), or by ribs adjoining the internal wall of the ballistic separation and stripping chamber (1) and arranged coaxially with the elevator (2) in the manner of a collar, said collar projecting from the internal wall of the chamber (1) above the bed (6) of catalytic particles in the course of stripping and being inclined towards the bed (6), thus forming, with a plane perpendicular to the axis of the chamber (1), an angle ($\alpha$) between 5 and 20°.

**2.** A device according to claim 1, characterized in that the means capable of forming a chicane (11) is arranged at a distance from the fluidised bed, which distance, in the direction of height, is between 0.50 and 0.95 times and, preferably, between 0.7 and 0.9 times the distance separating the opening of the elevator (2) from the fluidised bed (6) of catalytic particles in the course of stripping.

**3.** A device according to either one of claims 1 and 2, characterized in that the means capable of forming a chicane (11) fills between 5 and 35 % of the section of the passage between the elevator (2) and internal wall of the ballistic separation and stripping chamber (1).

**4.** A device according to any one of claims 1 to 3, characterized in that it comprises, below or above said collar, gas injectors preferably directed towards the axis of the chamber (1).

**5.** A device according to any one of claims 1 to 3, characterized in that the means capable of forming a chicane further comprises means of injecting a gas under pressure in the direction of the axis of said chamber.

**Patentansprüche**

**1.** Vorrichtung zum katalytischen Kracken von Kohlenwasserstoffchargen im fließenden Zustand, welche eine Kolonne (2) vom Elevatortyp;

am Fuß des Elevators angeordnete Mittel zur Speisung desselben unter Druck mit einer Charge von Kohlenwasserstoffen und Teilchen eines Krackkatalysators;

am Kopf des Elevators (2) und konzentrisch zu demselben einen Raum (1) zur Trennung der Kohlenwasserstoffdämpfe und der Teilchen von verkoktem Katalysator, welcher Raum an seinem Fuß (bei 5) mit einem Strippgas gespeist wird, im Gegenstrom zu den Teilchen von verkoktem Katalysator; lotrecht auf die obere Öffnung des Elevators (2) ausgerichtet und innen im Raum (1) einen ballistischen Separator (3);

wenigstens eine Einheit zur Regeneration des benutzten Katalysators, die von dem besagten Raum aus mit gestrippten Teilchen gespeist wird; und

Mittel zum Rückführen des regenerierten Katalysators von der Regenerationseinheit bis zu den Speisungsmitteln

aufweist, wobei der Raum (1) zur Abtrennung der Teilchen von verkoktem Katalysator und zum Strippen derselben auf einem Zwischenniveau zwischen dem Bett (6) von Teilchen beim Strippen und der Öffnung des Elevators (2) von der Innenwand des Raumes aus ein Mittel (11) umfaßt, welches dazu geeignet ist, eine Schikane zu bilden, um den freien Durchgang örtlich an der Peripherie des Elevators (2) zu begrenzen, dadurch **gekennzeichnet**, daß das zur Bildung einer Schikane geeignete Mittel von einem an die Innenwand des Raumes (1) zur ballistischen Trennung und zum Strippen angrenzenden und koaxial zum Elevator (2) angeordneten Kranz (11) oder von Flügeln gebildet ist, welche an die Innenwand des Raumes (1) zur ballistischen Trennung und zum Strippen angrenzen und koaxial zum Elevator (2) angeordnet sind, nach Art eines Kranzes, wobei der Kranz von der Innenwand des Raumes (1) aus über dem Bett (6) von katalytischen Teilchen beim Strippen vorsteht und zum Bett (6) hin geneigt ist, und zwar unter Einschluß eines Winkels ($\alpha$) zwischen 5 und 20° mit einer zur Achse des Raumes (1) senkrechten Ebene.

2. Vorrichtung nach Anspruch 1, dadurch **gekennzeichnet**, daß das zur Bildung einer Schikane geeignete Mittel (11) in einem Abstand vom Fließbett angeordnet ist, welcher im Höhensinn zwischen dem 0,50fachen und dem 0,95fachen, vorzugsweise zwischen dem 0,7fachen und dem 0,9fachen, des Abstandes ausmacht, welcher die Öffnung des Elevators (2) vom Fließbett (6) von katalytischen Teilchen beim Strippen trennt.

3. Vorrichtung nach Anspruch 1 oder 2, dadurch **gekennzeichnet**, daß das zur Bildung einer Schikane geeignete Mittel (11) zwischen 5 und 35 % des Durchgangsquerschnitts zwischen dem Elevator (2) und der Innenwand des Raumes (1) zur ballistischen Trennung und zum Strippen verschließt.

4. Vorrichtung nach einem der Ansprüche 1 bis 3, dadurch **gekennzeichnet**, daß unter oder über dem Kranz Gasinjektoren vorgesehen sind, welche vorzugsweise zur Achse des Raumes (1) hin gerichtet sind.

5. Vorrichtung nach einem der Ansprüche 1 bis 3, dadurch **gekennzeichnet**, daß das zur Bildung einer Schikane geeignete Mittel zusätzlich Mittel zum Einblasen eines Gases unter Druck in Richtung der Achse des Raumes aufweist.